# EUROPÄISCHE PATENTANMELDUNG

(11) **EP 3 796 161 A1**
(43) Veröffentlichungstag der Anmeldung: **24.03.2021**
(21) Anmeldenummer: 19198405.3
(22) Anmeldetag: 19.09.2019
(51) Int. Cl.: G06F 9/455

(54) **VERFAHREN ZUR BESTIMMUNG EINER CONTAINER-KONFIGURATION EINES SYSTEMS, SYSTEM, COMPUTERPROGRAMM UND COMPUTERLESBARES MEDIUM**

(71) Anmelder: Siemens Aktiengesellschaft, 80333 München (DE)
(72) Erfinder: Albrecht, Harald, 90475 Nürnberg (DE)

(57) **Zusammenfassung**

Die Erfindung betrifft ein Verfahren zur Bestimmung einer Container-Konfiguration eines Systems (S), wobei das System (S) ein Betriebssystem (OS) aufweist und auf dem System (S) mehrere Software-Container (C1-C7) vorhanden sind, die von mehreren Container-Engines (CE1-CE4) verwaltet werden, bei dem mittels eines Discovery-Moduls (D)
a) die Container-Engines (CE1-CE4) erfasst werden, wobei in einem Prozessbaum (PT) des Betriebssystems (OS) des Systems (S)zu den Container-Engines (CE1-CE4) gehörige Container-Engine-Prozesse (PZ1-PZ4) ermittelt werden,
b) für die erfassten Container-Engines (CE1-CE4) Steuerkanäle (SK) ermittelt werden, über welche die Container-Engines (CE1-CE4) angesprochen werden können,
c) unter Nutzung zumindest einiger der Steuerkanäle (SK) ermittelt wird, welche Container (C1-C7) zu welchen Container-Engines (CE1-CE4) gehören und welche Prozesskennungen (PID) die Container (C1-C7) jeweils aufweisen, und
d) für eine oder mehrere der Container-Engines (CE1-CE4) ein Pfad (P) erstellt wird.

Darüber hinaus betrifft die Erfindung ein System (S) zur Durchführung eines solchen Verfahrens, ein Computerprogramm und ein computerlesbares Medium.

## Beschreibung

Die Erfindung betrifft ein Verfahren zur Bestimmung einer Container-Konfiguration eines Systems, wobei das System ein Betriebssystem aufweist und auf dem System mehrere Software-Container vorhanden sind, die von mehreren Container-Engines verwaltet werden. Darüber hinaus betrifft die Erfindung ein System zur Durchführung eines solchen Verfahrens, ein Computerprogramm und ein computerlesbares Medium.

Im Bereich der allgemeinen IT hat sich die so genannte Container-Technologie bewährt. Container, die auch als Anwendungs- bzw. Software-Container bezeichnet werden können, stellen in der Regel "abgekapselte" Einheiten dar, die unabhängig voneinander ausgeführt werden können, egal wo sie sich befinden. Ähnlich wie bei virtuellen Maschinen (abgekürzt VMs) sind Container eine Art Behälter für Anwendungen, in denen diese laufen können. Während virtuelle Maschinen jedoch eine ganze Computerumgebung abbilden, enthalten die Container üblicherweise lediglich die wichtigen Daten, die für die Ausführung der jeweiligen Anwendung bzw. Anwendungen benötigt werden.

Die Container-Technologien bzw. die Containerisierung ermöglichen es insbesondere, eine Software bzw. Anwendung in einem Container zu verpacken, der alles umfasst, was sie zum Laufen braucht, beispielsweise Programmcode, Laufzeit, System-Tools und/oder Systembibliotheken. Die Container-Technologien bzw. Funktionen können einfach und bequem modular verpackt, transportiert und schließlich in den operativen Bereich ausgerollt werden. Container erlauben somit einen flexiblen Transport und Einsatz modularer Software in Form eigenständig ablauffähiger Bausteine ohne Abhängigkeiten zu den Software-Bibliotheken des ausführenden Betriebssystems. Klassische Einsatzgebiete von Containern liegen beispielsweise darin Applikationen, etwa eine Datenbank oder einen Web-Front-End, bequem zu verpacken.

Die positiven Eigenschaften können nach Ansicht der Anmelderin aber z.B. auch vorteilhaft in den Industrial Edge-Produkten der Digital Industry (DI) eingesetzt werden.

Beispiele für Software für die Container-Virtualisierung/Containerisierung sind etwa "Docker" oder "rkt" (gesprochen "rocket", siehe etwa https://coreos.com/rkt/sowie https://www.docker.com bzw. EP 3 267 351 A1 zu Docker). Ein Beispiel für ein Orchestrierungssystem/-tool bzw. eine Orchestrierungs-Software für Container ist durch "Kubernetes" gegeben (siehe etwa https://kubernetes.io/ sowie https://de.wikipedia.org/wiki/Kubernetes) .

Die Container werden in der Regel von sogenannten "Container-Engines" verwaltet, die sich beispielsweise um das Herunterladen der benötigten Container-Abbilder und das Starten und Stoppen kümmern. Ins Deutsche übersetzt könnte man eine Container-Engine auch als Container-Maschine oder Container-Mechanik bezeichnen. Container-Engines verstecken in der Regel die technischen Details eines unterlagerten Betriebssystems, aus denen Container zur Laufzeit zusammengesetzt werden.

Es kann, beispielsweise aus Gründen der Systemorganisation oder Sicherheit, gewünscht oder erforderlich sein, die in einem einzelnen System, beispielsweise einer einzelnen virtuellen Maschine oder einer einzelnen "bare metal"-Installation insbesondere ohne Hypervisor (Virtual-Machine-Monitor, abgekürzt VMM) auszuführenden Container auf mehr als eine Container-Engine, etwa zwei, drei oder mehr Container-Engines aufzuteilen. Dabei können die Container-Engines sowohl Seite-an-Seite (side-by-side) als auch quasi wie Matrjoschkas ineinander geschachtelt (container-in-container) ausgeführt sein. Letztere Konfiguration ist insbesondere unter dem Namen "Docker-in-Docker" (kurz: DinD) bekannt.

Systemkonfigurationen mit mehreren Container-Engines verkomplizieren jedoch Diagnosen beispielsweise der Kommunikation zwischen Containern sowie Containern und der Umwelt signifikant.

Anwender und Entwickler wünschen sich den einfachen Umgang mit Containern wie im Falle einer einzelnen Container-Engine auch in komplexen Systemkonfigurationen mit mehreren Container-Engines in möglicherweise sogar gemischten Anordnungen Seite-an-Seite und Container-in-Container.

Die heute bekannten Cluster-Verwaltungs- und -Orchestrierungs-Systeme (etwa Kubernetes und Rancher, siehe beispielsweise https://en.wikipedia.org/wiki/Rancher_Labs) bieten hier keine Unterstützung. Diese Systeme gehen von dem Grundmodell aus, bei dem pro (Arbeits-)System wie etwa VM bzw. bare metal jeweils nur eine Container-Engine eingesetzt wird. Dieses schließt zwar komplexere Systemkonfigurationen nicht prinzipiell aus, diese werden jedoch nicht unterstützt.

Die Anmelderin erwartet, dass ein wiederkehrendes Element in verschiedenen Anwendungen im Kontext von Containern, wie beispielsweise der Kommunikation auf (virtueller) Netzwerkebene, das automatische Auffinden aller Container in einem System (VM, bare metal) auch über mehrere Container-Engines hinweg und das Bereitstellen dieser Informationen, bevorzugt angereichert um logische Hierarchie-Daten, zur weiteren Verwendung in verschiedenen Diagnose-Werkzeugen und Applikationen sein wird.

Bisher erfordert der Umgang und die Diagnose von Systemen mit mehreren Container-Engines detailliertes Systemwissen in verschiedenen Dimensionen wie beispielsweise Container-Engine-Tools, spezifischen Systemkonfigurationen, Betrieb von Container-Engines ihrerseits in Containern, Werkzeugen der Betriebssysteme und spezifischen Informationsquellen in den Betriebssystemen. Anwender müssen die Hierarchie von Container-Engines mental selbst erstellen und zudem verschiedene Werkzeuge mehrfach in verschiedenen Kontexten ausführen, was mit nicht unbeachtlichem Aufwand verbunden ist. Als Werkzeuge in diesem Kontext seien rein beispielhaft docker-inspect (siehe z.B. https://docs.docker.com/engine/reference/commandline/inspect/ ), kubectl (siehe z.B. https://kubernetes.io/de/docs/tasks/tools/install-kubectl/), grep (siehe z.B. https://de.wikipedia.org/wiki/Grep), netstat (siehe z.B. https://wiki.ubuntuusers.de/netstat/) und dergleichen genannt.

Es ist daher eine Aufgabe der vorliegenden Erfindung, ein Verfahren anzugeben, mittels dem für den Fall, dass in einem System Container auf mehrere Container-Engines aufgeteilt sind, die Container aufgefunden und Informationen über die hierarchische bzw. topologische Anordnung der Container und/oder Container-Engines erhalten werden kann. Das Verfahren soll sich dabei einfach durchführen lassen und im Vergleich zum Stand der Technik weniger oder gar detailliertes Systemwissen seitens der Anwender voraussetzen. Weiterhin ist es eine Aufgabe der Erfindung ein System anzugeben, welches für die Durchführung eines solchen Verfahrens geeignet ist.

Die erstgenannte Aufgabe wird gelöst durch ein Verfahren zur Bestimmung einer Container-Konfiguration eines Systems, wobei das System ein, bevorzugt genau ein Betriebssystem aufweist und auf dem System mehrere Software-Container vorhanden sind, die von mehreren Container-Engines verwaltet werden, wobei bevorzugt jeder Container von genau einer der Container-Engines verwaltet wird,
bei dem mittels eines Discovery-Moduls
a) die Container-Engines erfasst werden, wobei in einem Prozessbaum des Betriebssystems des Systems zu den Container-Engines gehörige Container-Engine-Prozesse ermittelt werden,
b) für die erfassten Container-Engines Steuerkanäle ermittelt werden, über welche die Container-Engines angesprochen werden können,
c) unter Nutzung zumindest einiger der Steuerkanäle ermittelt wird, welche Container zu welchen Container-Engines gehören und welche Prozesskennungen die Container jeweils aufweisen, und
d) für eine oder mehrere der Container-Engines ein Pfad erstellt wird, wobei ermittelt wird, ob in dem Prozessbaum ausgehend von der Prozesskennung der oder der jeweiligen Container-Engine in Richtung der Prozessbaumwurzel eine oder mehrere Prozesskennungen vorhanden sind, welche jeweils zu einem der in Schritt c) ermittelten Container gehören, Container-Prozesskennungen, und für den Fall, dass eine oder mehrere Container-Prozesskennungen vorhanden sind, eine Kennung, insbesondere ein Name des zugehörigen Containers bzw. Kennungen, insbesondere Namen der zugehörigen Container in den Pfad der oder der jeweiligen Container-Engine aufgenommen wird bzw. werden.

Die zweitgenannte Aufgabe wird gelöst durch ein System, das zur Durchführung des erfindungsgemäßen Verfahrens ausgebildet und/oder eingerichtet ist.

Das erfindungsgemäße System zeichnet sich bevorzugt dadurch aus, dass auf diesem mehrere Software-Container vorhanden sind, die von mehreren Container-Engines verwaltet werden, wobei bevorzugt jeder Container von genau einer der Container-Engines verwaltet wird, und dass das System ein Betriebssystem umfasst und ein Discovery-Modul, das dazu ausgebildet und/oder eingerichtet ist,
a) die Container-Engines zu erfassen, wobei in einem Prozessbaum des Betriebssystems des Systems zu den Container-Engines gehörige Container-Engine-Prozesse ermittelt werden,
b) für die erfassten Container-Engines Steuerkanäle zu ermitteln, über welche die Container-Engines angesprochen werden können,
c) unter Nutzung zumindest einiger der Steuerkanäle zu ermitteln, welche Container zu welchen Container-Engines gehören und welche Prozesskennungen die Container jeweils aufweisen, und
d) für eine oder mehrere der Container-Engines einen Pfad zu erstellen, wobei ermittelt wird, ob in dem Prozessbaum ausgehend von der Prozesskennung der oder der jeweiligen Container-Engine in Richtung der Prozessbaumwurzel eine oder mehrere Prozesskennungen vorhanden sind, welche jeweils zu einem der in Schritt c) ermittelten Container gehören, Container-Prozesskennungen, und für den Fall, dass eine oder mehrere Container-Prozesskennungen vorhanden sind, eine Kennung, insbesondere ein Name des zugehörigen Containers bzw. Kennungen, insbesondere Namen der zugehörigen Container in den Pfad der oder der jeweiligen Container-Engine aufgenommen wird bzw. werden.

Der Erfindung liegt mit anderen Worten die Idee zugrunde, einen Discovery-Service bereitzustellen, mittels dem einerseits automatisch die aktuell in einem System auch mit mehreren Container-Engines vorhandenen Container ermittelt werden können, und es andererseits möglich ist, ebenfalls automatisch, Informationen zu der logischen Hierarchie bzw. Topologie zu erfassen. Der Discovery-Service wird dabei von dem Discovery-Modul bereitgestellt. Die logische Hierarchie bzw. Topologie wird dabei insbesondere anhand der konkreten Anordnung der aufgefundenen Container-Engines gestaltet.

Sollten Container bzw. Container-Engines ausschließlich in einer Side-by-Side-Anordnung vorhanden sein, liegt streng genommen keine Hierarchie mit über- und unterlagerten Engines vor, weshalb der allgemeinere Begriff Topologie vor allem in diesem Falle passender ist.

Bevorzugt erstellt das Discovery-Modul ein Datenmodell, das alle in Schritt c) ermittelten Container aufführt.

Der Discovery-Service und somit Discovery-Modul erstellt mit anderen Worten in bevorzugter Ausgestaltung ein aktuelles Datenmodell, das alle aufgefundenen Container in einem einzelnen System auch über verschiedene Container-Engines hinweg aufführt. Zusätzlich bestimmt der Discovery Service bevorzugt eine logische Hierarchie bzw. Topologie der Container-Engines, insbesondere über die Erstellung der Pfade. Wird von dem Discovery-Modul ein Datenmodell erstellt, umfasst dieses entsprechend bevorzugt auch den oder die in Schritt d) erstellten Pfade. Das Datenmodell umfasst besonders bevorzugt, welche Prozesskennung der jeweilige Container hat und welcher der erstellten Pfade zu dem jeweiligen Container gehört. Mit anderen Worten kann bevorzugt für jeden Container dessen Prozesskennung und der dem Container zugehörige Pfad abgelegt sein. Dies ist der Pfad, welcher für diejenige Container-Engine erstellt wurde, welcher der jeweilige Container zugeordnet ist.

Die erfindungsgemäße Vorgehensweise bietet diverse Vorteile. Sie stellt einen universellen Basisdienst zur Container Discovery in verschiedenen Systemkonfigurationen bereit, auf dem dann spezialisierte Diagnosewerkzeuge und Anwendungen einfach aufbauen können. Die Erfindung kann somit einen wichtigen Baustein beispielsweise für Diagnose und Überwachung der Container-Kommunikation etwa in industriellen Clustern mit Industrial Edge-Geräten bilden. Es wird ein einfacher, eindeutiger Umgang mit Containern auch in komplexen Systemkonfigurationen von Arbeitsknoten (bspw. Industrial Edges) mit mehreren Container-Engines im gleichen System in verschiedenen Anordnungen möglich. Es können erstmalig Konfigurationen abgedeckt werden, die durch die konventionellen, vorbekannten Management- und Orchestrierungswerkzeuge nicht erfasst werden. Die Komplexität von Systemkonfigurationen wird dabei vor dem Anwender versteckt und diesem wird erlaubt, auf der von ihm gewünschten einfachen Abstraktionsebene der Container zu arbeiten, ganz ohne unnötiges Detailwissen über Systemkonfigurationen. Anwender brauchen kein detailliertes Wissen, da der erfindungsgemäße Discovery-Prozess automatisch abläuft. Das automatische Auffinden der vorhandenen Container-Engines (und Steuerkanälen) erfolgt dabei bevorzugt allein anhand der lokal verfügbaren Informationen des Betriebssystems und bevorzugt wird automatisch eine Container-Hierarchie bzw. - Topologie anhand der vorgefundenen aktuellen Anordnung ("Schachtelung") von Container-Engines in Containern generiert.

Durch die Erfindung wird es u.a. möglich, zu erfassen, ob sich Container-Engines in einer Side-by-Side Anordnung befinden und/oder ob sich Container-Engines in einer Container-in-Container-Anordnung befinden.

Dabei können beispielsweise drei Container-Engines vorhanden sein, die jeweils zwei Container verwalten. Zweckmäßiger Weise gilt, dass jeder Container von genau einer der Container-Engines verwaltet wird. Bei dem genannten Beispiel wären dann sechs Container vorhanden.

Es kann sein, dass wenigstens zwei Container-Engines in einer Side-by-Side-Anordnung und/oder wenigstens zwei Container-Engines in einer Container-in-Container-Anordnung vorgesehen sind. Sind drei Container-Engines vorhanden, können beispielsweise zwei Container Side-by-Side, insbesondere in einer Hierarchieebene liegen, und die dritte Container-Engine in einem Container einer der beiden Side-by-Side Engines, so dass sich die dritte Engine mit dieser Engine in einer Container-in-Container-Konfiguration befindet.

Dass ein Container vorhanden ist, kann beispielsweise bedeuten, dass dieser (erst einmal nur) erzeugt ist, insbesondere ohne dass in ihm schon Prozesse gestartet worden sind bzw. laufen. Der Container ist dann insbesondere (nur) konfiguriert. Weiterhin können die Prozesse in einem Container bereits beendet worden sein, der Container aber verwaltungstechnisch noch erkennbar sein. Zudem kann ein Container mit Prozessen auch angehalten (sozusagen eingefroren) sein. Alternativ oder zusätzlich können auch Container in diesem "Zustand" als vorhanden aufgefasst und Schritt c) ermittelt werden.

Diese Dualität von "erzeugt" versus "läuft" ist besonders bei containerd (https://containerd.io/) sichtbar. Hier wird zwischen dem "Container" als konfiguriertes Element und seiner Ausführung als sog. "Task" unterschieden. Beide Sichten sind hierbei über die identische ID miteinander verknüpft. In beiden Fällen ist der betreffende Container im Sinne der vorliegenden Anmeldung vorhanden.

Vorzugsweise wird bei der Erfassung der Container auf alle konfigurierten Container abgestellt. Sollte von vornherein bekannt sein, dass Interesse beispielsweise nur an laufenden Containern besteht, kann alternativ dazu beispielsweise nur auf laufende Container abgestellt werden.

Der Prozessbaum führt insbesondere in an sich bekannter Weise die Prozesse auf, bevorzugt sämtliche Prozesse, die aktuelle auf dem System laufen. Der Prozessbaum kann prinzipiell auch in Tabellenform vorliegen (man spricht dann auch von einer Prozesstabelle), welche die Prozesse und die Informationen über die Baumstruktur enthält, insbesondere Informationen, welche Prozesse jeweils Elternprozesse (englisch: Parent Processes) eines anderen Prozesses sind. Im Zusammenhang mit dem Prozessbaum (bzw. der Prozesstabelle) sei beispielhaft auch auf https://de.wikipedia.org/wiki/Procfs verwiesen.
Die Prozesskennung ist bevorzugt in an sich bekannter Weise eine Kennung, die der eindeutigen Identifikation von Prozessen dient. Sie wird auch Process Id oder abgekürzt PID bezeichnet. Zur Prozesskennung siehe z.B. https://de.wikipedia.org/wiki/Process_identifier. Die Prozesskennung eines Elternprozesses wird auch als Parent Process ID oder kurz PPID bezeichnet.

Bei dem erfindungsgemäßen System kann es sich beispielsweise um einen PC, etwa Industrie-PC handeln. Das System kann in Form eines Arbeitsknotens eines insbesondere industriellen Clusters gegeben sein. Es kann sich auch um eine sogenannte Industrial Edge bzw. ein sogenanntes Industrial-Edge-Gerät handeln. Unter einer Edge bzw. einem Edge-Gerät ist insbesondere ein Gerät zu verstehen, welches die bzw. wenigstens eine Funktion des Edge-Computings ausführt (zum Edge-Computing siehe z.B. https://de.wikipedia.org/wiki/Edge_Computing). Ein Industrial-Edge-Gerät kann beispielsweise durch einen Industrie-Computer gegeben sein, der eine Edge-Computing Funktion ausführt. In einem Cluster mit mehr als einem Arbeitsknoten ist bevorzugt jedem Knoten ein Discovery-Modul vorgesehen bzw. implementiert.

Es kann ferner sein, dass das erfindungsgemäße System durch eine virtuelle Maschine (VM) gegeben ist oder eine solche umfasst. Auch für den Fall, dass das erfindungsgemäße System in Form einer virtuellen Maschine (VM) vorliegt, weist dieses bevorzugt ein Betriebssystem, insbesondere genau ein Betriebssystem auf.

Dass mehrere Container-Engines, beispielsweise zwei oder drei oder mehr Container-Engines vorhanden sind, bedeutet insbesondere bzw. schließt insbesondere mit ein, dass die vorhandenen Container in zwei oder mehr Verwaltungsbereiche partitioniert sind und zu jedem Bereich eine eigene (Instanz einer) Container-Engine gehört.

Eine Container-Engine kann beispielsweise durch eine Docker-Engine gegeben sein (siehe z.B. https://docs.docker.com/engine/). Eine Docker-Engine kann einen Docker Daemon und einen Container Daemon umfassen. Sie kann ferner die Container-Runtime runC umfassen. Zu runC siehe beispielsweise https://blog.docker.com/2017/08/what-iscontainerd-runtime/).

Eine Container-Engine kommt in der Regel insbesondere dafür zum Einsatz, API/Nutzer-Schnittstellen bereitzustellen und/oder Container-Images zu erzeugen und/oder Konfigurationen bzw. Konfigurationsdateien bereitzustellen, beispielsweise eine config.json.

Dass eine Container-Konfiguration des Systems bestimmt wird bedeutet insbesondere oder schließt insbesondere mit ein, dass die vorhanden Container-Engines und Container ermittelt und eine Topologie bzw. Hierarchie der Container-Engines ermittelt wird. Es sei angemerkt, dass unter einer Container-Konfiguration auch ein Container-Deployment oder deutsch Container-Einsatz zu verstehen sein bzw. eine Container-Konfiguration ein Container-Deployment bzw- -Einsatz umfassen kann.

Das erfindungsgemäß vorgesehene Discovery-Modul überwacht bevorzugt das Betriebssystem und die Container-Engines. Die Überwachung erfolgt zweckmäßigerweise weitestgehend bzw. voll automatisch.

Das Discovery-Modul ist besonders bevorzugt auf dem System vorgesehen, dessen Container-Engines und zugehörige Container zu erfassen sind. Das Discovery-Modul kann beispielsweise in Software oder in Hardware oder in einer Kombination aus Software und Hardware implementiert sein. Ein Discovery-Modul kann beispielsweise als Software-Module auf dem System implementiert sein. Es kann ein "einfacher" Prozess sein, der bevorzugt in das System integriert oder installiert ist. Es kann beispielsweise auch seinerseits als Container installiert und ausgeführt werden.

Ist für mehrere Systeme eine Container-Discovery erwünscht bzw. erforderlich, ist bevorzugt jedem System ein eigenes Discovery-Modul zugeordnet, insbesondere auf jedem System ein eigenes Discovery-Modul implementiert.

Von dem Discovery-Modul werden die auf dem (jeweiligen) System vorhandenen Container-Engines erfasst. Container-Engines können beispielsweise anhand deren Namen (z.B. "dockerd") bzw. anhand von Teilen von deren Namen erkannt werden. Das Discovery-Modul kann in vorteilhafter Ausführung entsprechend ausgebildet und/oder eingerichtet sein. Es ist auch möglich, dass das Discovery-Modul eine Liste mit bekannten Namen bzw. bekannten Teilen von Namen von Container-Engine-Prozessen im Prozessbaum des Betriebssystems heranzieht. Container-Engines können alternativ oder zusätzlich auch über bekannte Prozesseigenschaften dieser gefunden werden. Es kann auch bekannt sein, welche Größe diese aufweisen, bzw. in welchem Bereich deren Größe liegt. Dann kann eine Suche bzw. Identifikation über die Größe erfolgen. Das Discovery-Modul kann in Weiterbildung entsprechend ausgebildet und/oder eingerichtet sein.

Besonders bevorzugt werden in Schritt a) auch die Prozesskennungen der Container-Engine-Prozesse der Container-Engines ermittelt.

Das Ergebnis der Suche bzw. der Container-Engine-Erfassung ist insbesondere eine Liste von Prozesskennungen aktuell laufender Container-Engines, insbesondere aller aktuell laufender Container-Engines.

Für die erfassten Container-Engines werden von dem Discovery-Modul in Schritt b) Steuerkanäle ermittelt, über welche die Container-Engines angesprochen werden können bzw. könnten. Diese Steuerkanäle können auch als mögliche Steuerkanäle erachtet und bezeichnet werden. Steuerkanäle können beispielsweise durch sogenannte Unix Sockets, insbesondere Control Unix Sockets gegeben sein. Zu Unix Sockets siehe beispielsweise https://de.wikipedia.org/wiki/POSIX_local_inter-process_communication_socket.

Vorteilhafter Weise ist das Ergebnis für jede einzelne Container-Engine zunächst eine eigene (zweckmäßiger Weise geordnete) Liste von potenziellen, möglichen Steuerkanälen, über die die jeweilige Container-Engine angesprochen werden könnte. Je nach Art einer Container Engine existieren möglicherweise mehrere Steuerkanäle für diese, wobei jeder Steuerkanal möglicherweise andere Funktionen bereitstellt. Es kann sein, dass nicht jeder Steuerkanal die Funktionalität bereitstellt, um auf die Liste der Container einer Container-Engine zuzugreifen.

Es kann vorgesehen sein, dass in Schritt b) das Ermitteln der Steuerkanäle einschließt, dass in Mount-Namensräume der Container-Engines jeweils diejenigen Steuerkanäle, insbesondere Unix Sockets, bevorzugt zusammen mit ihren inode-Nummern und ihren Pfaden im Dateisystem erfasst bzw. ermittelt werden, die sich im Zustand "listen" befinden. Das Erfassen bzw. Ermitteln der Steuerkanäle, insbesondere Unix Sockets kann dabei anhand von Informationen aus /sys/net/unix erfolgen. Unter http://man7.org/linux/man-pages/man2/listen.2.html beispielsweise ist die API-Funktion "listen(2)" beschrieben, mit der u.a. ein Unix Socket in den Zustand LISTEN versetzt wird.

Bevorzugt werden anschließend der Reihe nach Handle, insbesondere Dateideskriptoren ("fd"), der Container-Engines anhand ihrer inode-Nummern darauf bzw. dahingehend geprüft, ob sie auf einen der zuvor ermittelten, sich im Zustand "listen" befindlichen Steuerkanäle, insbesondere Unix Sockets, verweisen. Dabei wird insbesondere auf offene Handle, bevorzugt offene Dateideskriptoren abgestellt. Weiter bevorzugt werden nur diejenigen Steuerkanäle als Steuerkanäle bzw. mögliche Steuerkanäle erachtet und erfasst, für welche dies zutrifft, welche also auf einen der zuvor ermittelten Steuerkanäle im Zustand "listen" verweisen.

Zu inode-Nummern (auch Inodenummern geschrieben) siehe beispielsweise https://de.wikipedia.org/wiki/Inode.

Die Mount-Namensräume (englisch: mount namespaces) sind insbesondere - in an sich aus dem Stand der Technik vorbekannter Weise - Namensräume des Betriebssystems bzw. Betriebssystem-Kernels, beispielsweise Linux- bzw. Linux-Kernel-Namensräume (siehe z.B. https://en.wikipedia.org/wiki/Linux_namespaces). Zu Handlen siehe zum Beispiel https://de.wikipedia.org/wiki/Handle und zu Dateideskriptoren (englisch: file descriptors, abgekürzt fd) beispielsweise https://en.wikipedia.org/wiki/File_descriptor. Dateideskriptoren sind insbesondere sozusagen "Anfasser" für Datenkanäle zu Dateien, Geräten, Unix sockets, etc.

In Schritt c) werden von dem Discovery-Modul zu den von diesem erfassten Container-Engines gehörige Container ermittelt. Bevorzugt werden alle Container von allen Container-Engines ermittelt. Es ist natürlich möglich, dass der Versuch der Container-Ermittlung für wenigstens eine der Engines fehlschlägt. Somit kann es durchaus sein, dass nur für einige, ggf. sogar nur für eine Engine die zugehörigen Container erfasst werden.

Zweckmäßiger Weise werden auch die zu den Containern gehörigen Prozesskennungen ermittelt, sowie bevorzugt zu den Containern gehörige Namen, insbesondere Namen, die Container aus applikativer Sicht und/oder anwenderseitig gegeben wurden.

In besonders bevorzugter Ausgestaltung wird in Schritt c) für die oder die jeweilige Container-Engine in dem Mount-Namensraum dieser versucht, über den oder die Steuerkanäle die Container-Engine zu kontaktieren und den oder die dieser zugeordneten Container abzufragen. Diejenigen Steuerkanäle, über welche dies gelingt, können als geeignete Steuerkanäle aufgefasst und bezeichnet werden. Sofern möglich, werden zweckmäßiger Weise über den oder die für die (jeweilige) Container-Enge ermittelten (möglichen) Steuerkanäle die zugehörigen Container sowie bevorzugt jeweils die Prozesskennungen und Namen dieser abgefragt.

Um dies für mehrere, insbesondere alle Container-Engines durchzuführen, kann der Reihe nach in die Mount-Namensräume von mehreren, etwa zwei oder mehr, bevorzugt allen Container-Engines gewechselt werden, wobei jeweils für den Fall, dass die einer Container-Engine zugeordneten Container sowie bevorzugt deren Prozesskennungen und Namen ausgelesen werden konnten oder auch über keinen der Steuerkanäle der Container-Engine deren Container ausgelesen werden konnten, in den Mount-Namensraum der nächsten Container-Engine gewechselt und versucht wird, die zugeordneten Container dieser zu ermitteln.

So kann der Reihe nach von Mount-Namensraum zu Mount-Namensraum der laufenden Container-Engines gewechselt werden, bis alle vorhandenen Engines durch sind. Nach der letzten Container-Engine findet zweckmäßiger Weise kein weiterer Wechsel mehr statt.

Zur Ermittlung von Hierarchie- bzw. Topologie-Informationen wird bevorzugt die Verteilung der zu Containern gehörigen Container-Prozesskennungen über den Prozessbaum des Betriebssystems herangezogen.

In Schritt d) wird von dem Discovery-Modul für eine oder mehrere der Container-Engines ein Pfad erstellt. Bevorzugt wird für jede erfasste Engine ein Pfad erstellt. Es ist natürlich denkbar, dass dies für wenigstens eine der erfassten Engines nicht möglich ist, beispielsweise, weil es bereits nicht möglich war, einen oder mehrere Steuerkanäle für diese zu finden bzw. deren Container nicht über diese erfasst werden konnten.

Unter einem Pfad ist insbesondere eine hierarchische Kennung bzw. eine Kennung zu verstehen, aus der eine Hierarchie bzw. Hierarchie-Informationen abzuleiten ist bzw. sind, insbesondere aufgrund der Reihenfolge von in dem Pfad bzw. der Kennung enthaltenen Bestandteilen. Im Rahmen der vorliegenden Anmeldung ist unter einer hierarchischen Information bzw. Hierarchieinformation für eine Container-Engine insbesondere eine bzw. die Information zu verstehen, ob die Container-Engine Matrjoschka-artig in einen oder mehrere Container "verschachtelt" ist oder nicht, was man zweckmäßiger Weise dem für die Container-Engine erstellten Pfad entnehmen kann, insbesondere auch, "wie viele Container tief" die Container-Engine liegt. Ein Pfad kann durch einen hierarchischen Namen mit anderen Worten Hierarchienamen gegeben sein. Insbesondere aus dem Vergleich bzw. der Betrachtung der Pfade mehrerer, bevorzugt aller vorhandener Container-Engines kann die gesamte Hierarchie bzw. Topologie ermittelt bzw. dargestellt bzw. abgeleitet werden.

Besonders bevorzugt wird in dem Prozessbaum ausgehend von der Prozesskennung der jeweils betrachteten Container-Engine in Richtung der Wurzel des Prozessbaums gesucht, und für jede zu einem der in Schritt c) ermittelten Container gehörende Prozesskennung (Container-Prozesskennung) wird eine Kennung desjenigen Containers, dessen Container-Prozesskennung (jeweils) gefunden wurde, dem bisherigen, zu Beginn der Suche insbesondere leeren Pfad hinzugefügt, bevorzugt vorangestellt.

Es ist prinzipiell möglich, dass der jeweilige Pfad auch noch den bzw. eine Kennung, insbesondere den bzw. einen Namen der Container-Engine erhält, der zum Beispiel "dockerd" lauten kann. Für das vorgenannte Beispiel würde sich dann als Pfad "dockerd/outer" ergeben.

Es sei angemerkt, dass es sich bei der bzw. den Kennungen von Containern und/oder von Container-Engines, die den Pfaden hinzugefügt, also für die Pfaderstellung genutzt werden prinzipiell um Kennungen bzw. Kennzeichnungen bzw. Bezeichnungen beliebiger Art handeln kann. Besonders bevorzugt handelt es sich um Namen der Container und/oder Container-Engines, über welche diese unterscheidbar sind. Bei den Namen kann es sich um Wörter handeln. Die Namen können z.B. ausschließlich Buchstaben umfassen, dies ist jedoch nicht zwingend erforderlich. Namen können prinzipiell alternativ oder zusätzlich zum Beispiel auch Ziffern oder andere Zeichen aufweisen.

Es sei angemerkt, dass alternativ oder zusätzlich zu Namen als Kennungen der Container und/oder Container-Engines prinzipiell auch deren Prozesskennungen für die Pfade verwendet werden können. Insbesondere da sich diese ggf. auch ändern können, ist es in der Regel jedoch vorteilhaft anderen Kennungen, bevorzugt Container-(Engine-)Namen in die Pfade aufzunehmen, besonders bevorzugt solche, die von einem Anwender vergeben wurden und/oder die auch für den Fall, dass ein Container beendet und anschließend neu gestartet wird, gleich bleiben.

Der Name eines Containers wird bevorzugt von der jeweiligen Container-Engine verwaltet, zu welcher der Containergehört, und kann beispielsweise auch automatisch generiert oder auch durch ein Container-Orchestrierungs-System vorgegeben werden bzw. worden sein.

Weiterhin können alternativ oder zusätzlich dazu, dass Namen der Container als Kennungen in die Pfade aufgenommen, also für die Pfaderstellung genutzt werden, beispielsweise auch UUIDs und/oder UIDs als Kennungen der Container zum Einsatz kommen. UUID steht dabei in an sich bekannter Weise für Universally Unique Identifier (siehe beispielsweise https://de.wikipedia.org/wiki/Universally_Unique_Identifier) und UID für Unique Identifier.

Es ist auch nicht ausgeschlossen, dass jeweils mehrere Kennungen, die einem Container bzw. einer Container-Engine zugeordnet sind, dem (jeweiligen) Pfad hinzugefügt werden. In der Regel wird jedoch eine Kennung, etwa der Name ausreichen. Entsprechend wird bevorzugt pro gefundener Container-Prozesskennung genau eine Kennung des zugehörigen Containers in den (jeweiligen) Pfad aufgenommen.

Eine besonders bevorzugte Ausführungsform zeichnet sich ferner dadurch aus, dass in Schritt d) für die oder die jeweilige Container-Engine zunächst ein leerer Pfad oder Ursprungspfad angenommen und insbesondere zunächst als leerer Pfad oder Ursprungspfad initialisiert wird (beispielsweise: Python: p = ""; Golang: p := "", usw.). Für den Fall, dass für eine Container-Engine eine oder mehrere Container-Prozesskennungen gefunden werden, kann dann beispielsweise die Kennung, insbesondere der Name bzw. können dann beispielsweise die Kennungen, insbesondere die Namen der zugehörigen Container dem (jeweiligen) leeren Pfad bzw. Ursprungspfad hinzugefügt werden. Für den Fall, dass für eine Container-Engine hingegen keine Container-Prozesskennungen gefunden wird, wird dieser Engine zweckmäßiger Weise der leere Pfad bzw. Ursprungspfad zugeordnet. Ein leerer Pfad bzw. Ursprungspfad kann beispielsweise durch "" oder "/" gegeben sein.

Der Pfad der oder der jeweiligen Container-Engine ist insbesondere die Aneinanderreihung der Kennungen, insbesondere Namen der bei dem "Klettern" entlang des Prozessbaums bzw. Prozessbaum-Astes gefundenen Container bevorzugt in umgekehrter Reihenfolge. Wenn beispielsweise ein Container die Kennung bzw. der Name "outer" zugewiesen bekam, und dieser eine Container-Engine umfasst bzw. beinhaltet, dann bekommt die beinhaltete Container-Engine - und bevorzugt auch die dieser zugeordneten, insbesondere die von dieser verwalteten Container - den Pfad "outer" zugeordnet.

Wenn in Schritt d) für eine Container-Engine mehr als eine Container-Prozesskennung in dem Prozessbaum gefunden wird, etwa zwei oder drei oder mehr Container-Prozesskennungen gefunden werden, werden die zugehörigen Kennungen, insbesondere Namen besonders bevorzugt in umgekehrter Reihenfolge in den Pfad aufgenommen als die Container-Prozesskennungen ausgehend von der Prozesskennung der Container-Engine in Richtung der Prozessbaumwurzel in dem Prozessbaum vorhanden sind. Dies entspricht insbesondere der zum Auffinden der Container-Prozesskennungen umgekehrten Reihenfolge. Das bedeutet insbesondere, dass die Kennung, etwa der Name des zu der zuletzt gefundenen Container-Prozesskennung gehörigen Containers ganz links in der Pfadbezeichnung steht, derjenige der zuerst gefundenen hingegen ganz rechts.

Die Suche in dem Prozessbaum erfolgt zweckmäßiger Weise so lange, bis die oberste Prozesskennung des Prozessbaums bzw. die Wurzel erreicht ist. Damit ist die Suche für die betrachtete Container-Engine beendet und der Pfad fertig. Wird auf dem Weg von der Prozesskennung der betrachteten Container-Engine bis zur Wurzel keine Prozesskennung eines Containers gefunden, bedeutet dies, dass die Container-Engine nicht ihrerseits in einem Container liegt, sozusagen nicht in einen (oder auch mehrere) Container verschachtelt ist.

Es kann vorteilhaft sein zu vermeiden, dass zwei oder mehr der Container-Engines der gleiche Pfad zugeordnet wird.

In weiterer vorteilhafter Ausgestaltung ist daher vorgesehen, dass für den Fall, dass für die Container-Engines erstellten Pfade zwei oder mehr identische Pfade umfassen, eine Vereinzelung der Pfade durchgeführt wird. Die Vereinzelung der Pfade kann beispielsweise erfolgen, indem (jeweils) identischen Pfaden unterschiedliche zusätzliche Pfadbestandteile hinzugefügt werden. Als zusätzliche Pfadbestandteile zum Erhalt einer Vereinzelung kommen beispielsweise die Prozesskennung und/oder der Name der Container-Engine, für welche der jeweilige Pfad erstellt wurde, in Frage. Dies ist rein beispielhaft zu verstehen und es können selbstverständlich auch andere Bestandteile in identische Pfade eingefügt werden, um diese zu vereinzeln. Die einzige Anforderung ist, dass durch die Vereinzelungs-Maßnahme aus zwei oder mehr identischen Pfaden zwei oder mehr verschiedene Pfade erhalten werden.

Zum Erhalt der Pfadvereinzelung zusätzliche Bestandteile werden bevorzugt am hinteren, rechten Ende des Pfades hinzugefügt.

Der Fall, dass in Schritt d) für zwei oder auch mehr Container-Engines der gleiche Pfad erstellt wird, tritt insbesondere dann auf, wenn zwei oder mehr Container-Engines nebeneinander (Side-by-Side) in einem Container - oder auch auf der obersten Hierarchieebene - liegen. In diesem Fall werden bei dem "Klettern" entlang des Prozessbaums die gleichen Container-Prozesskennungen - oder auch keine Prozesskennungen - gefunden und entsprechend den Pfaden die gleichen Kennungen, insbesondere Namen der zugehörigen Container - oder auch keine Kennungen bzw. Namen - hinzugefügt, so das sich zwei oder auch mehr gleiche Pfade ergeben.

In bevorzugter Ausgestaltung prüft das Discovery-Modul insbesondere im Anschluss an die Erstellung aller Pfade in Schritt d), ob Pfade mehrfach vorhanden sind. Ergibt die Prüfung, dass dem so ist, vereinzelt bevorzugt das Discovery-Modul die Pfade.

Die Pfad-Vereinzelung erfolgt in besonders vorteilhafter Ausgestaltung derart, dass mit den kürzesten identischen Pfaden begonnen wird. Wird bzw. wurde zum Beispiel zwei oder mehr Container-Engines jeweils ein "leerer" Pfad bzw. ein Ursprungspfad zugeordnet, z.B. "/" oder "", werden bevorzugt zunächst diese vereinzelt und im Anschluss gegebenenfalls vorhandenen längere Pfade, zum Beispiel "/Outer" bzw. "/Outer/Inner".

Zweckmäßiger Weise werden für die Vereinzelung in kürzeren Pfaden durchgeführte Anpassungen in gegebenenfalls vorhandene, von den kürzeren Pfaden abhängige länger Pfade übernommen. Befindet sich beispielsweise eine Container-Engine mit dem Namen "A" in der obersten Hierarchie-Ebene und wird dieser der Pfad "/" zugeordnet und vereinzelt, indem die Prozesskennung dieser Container-Engine, z.B. "42", dem Pfad hinzugefügt wird, wodurch dann z.B. "/42" erhalten würde, und liegt in einem Container dieser Engine eine weitere Container-Engine, für welche entsprechend den Pfad "/A" in Schritt d) erstellt wurde, wird dieser abhängige Pfad "/A" bevorzugt zu "/42/A" angepasst.

In vorteilhafter Ausgestaltung überprüft das Discovery-Modul, nachdem es ein erstes Mal zwei oder auch mehr insbesondere kürzeste identische Pfade gefunden und vereinzelt und gegebenenfalls davon abhängige Pfade entsprechend angepasst hat, wenigstens ein weiteres Mal, ob noch identische Pfade vorhanden sind und vereinzelt dann auch diese. Dies kann so oft wiederholt werden, bis keine identischen Pfade mehr gefunden werden.

Eine weitere besonders vorteilhafte Ausführungsform zeichnet sich ferner dadurch aus, dass die in Schritt d) für die oder die jeweilige Container-Engine ermittelten und gegebenenfalls vereinzelten Pfade gespeichert werden, beispielsweise in dem Discovery-Modul bzw. einem Datenmodell des Discovery-Moduls. Ein Datenmodell ist bevorzugt durch die Pfade zusammen mit ihrer Zuordnung zu den einzelnen Containern und Container-Engines gegeben bzw. umfasst dies.

Alternativ oder zusätzlich wird der der bzw. werden die in Schritt d) für die oder die jeweilige Container-Engine ermittelten und gegebenenfalls vereinzelten Pfade in den Daten des oder der zugehörigen Container gespeichert. Bevorzugt wird in den Daten jedes einer Container-Engine zugeordneten Containers der Pfad der jeweiligen Engine abgelegt. So wird es möglich, dass insbesondere auch später noch eine einfache und eindeutige Zuordnung (jeweils) zwischen einem einzelnen Container und seiner Container-Engine zur Verfügung steht.

Dann kann wenigstens eine weitere Instanz, beispielsweise wenigstens ein Diagnose-Werkzeug, etwa ein solches, das die ermittelte Topologie einem Benutzer textuell oder grafisch anzeigt, auf von dem Discovery-Modul ermittelte und/oder bereitgestellte Daten, insbesondere auf ein von dem Discovery-Modul bereitgestelltes Informations- bzw. Datenmodell zugreifen.

Auf die bereitgestellten Daten kann beispielsweise auch von einem externen Plugin für das Aufzeichnen von Netzwerkverkehr (sog. Extcaps) zugegriffen werden. Ein solches, beispielsweise ein Wireshark-Plugin, kann ein Datenmodell des Discovery-Moduls z.B. verwenden, um einem Anwender eine Liste verfügbarer Container (insbesondere einschließlich deren Namen und Pfaden) zu präsentieren.

Mit anderen Worten kann ein Verfahren zur Diagnose des Netzwerkverkehrs durchgeführt werden, bei dem auf Daten zugegriffen wird, die im Rahmen der Durchführung des erfindungsgemäßen Verfahrens zur Bestimmung einer Container-Konfiguration insbesondere von dem Discovery-Modul gespeichert wurden.

Der Zugriff kann beispielsweise über ein REST API erfolgen. REST steht dabei für Representational State Transfer (siehe beispielsweise https://de.wikipedia.org/wiki/Representational_State_Transfer ) und API für Application Programming Interface (deutsch: Anwenderprogrammierschnittstelle, siehe beispielsweise https://de.wikipedia.org/wiki/Programmierschnittstelle) .

Das erfindungsgemäße System kann in vorteilhafter Ausgestaltung ausgebildet und/oder eingerichtet sein, um eines oder mehrere der vorstehend beschriebenen bevorzugten Merkmale zu realisieren. Soweit die vorstehen beschrieben Merkmale das Discovery-Modul betreffen, gilt, dass das Discovery-Modul in bevorzugter Weiterbildung entsprechend ausgebildet und/oder eingerichtet sein kann. Das erfindungsgemäße System kann entsprechend der abhängigen Verfahrensansprüche weitergebildet sein.

Ein weiterer Gegenstand der vorliegenden Erfindung ist ein Computerprogramm umfassend Programmcode-Mittel, die bei der Ausführung des Programms auf wenigstens einem Computer den wenigstens einen Computer veranlassen, die Schritte des erfindungsgemäßen Verfahrens durchzuführen.

Darüber hinaus betrifft die Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- Figur 1: eine rein schematische Darstellung eines Ausführungsbeispiels eines erfindungsgemäßen Systems;
- Figur 2: ein rein schematisches Diagramm zu einem Ausführungsbeispiel des erfindungsgemäßen Verfahrens;
- Figur 3: eine rein schematische Darstellung des Prozessbaums des Systems aus Figur 1 mit darunter dargestellten Container-Engines und Containern des Systems;
- Figur 4: die Darstellung aus Figur 3, wobei für die Container und Container-Engines die ermittelten Pfade eingetragen sind; und
- Figur 5: die Darstellung gemäß Figur 4 für den Fall, dass identische Pfade vereinzelt werden.

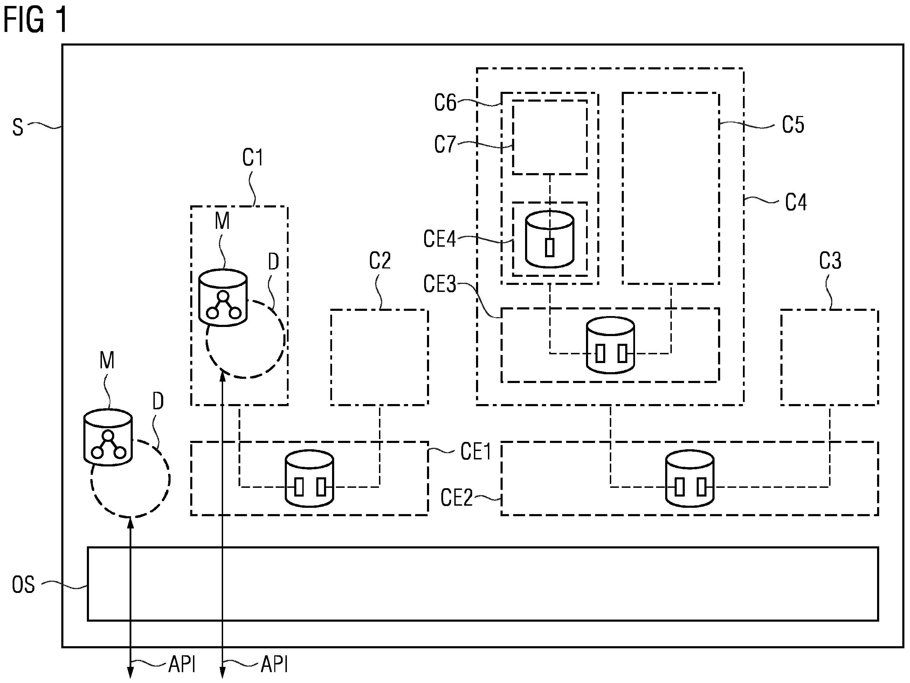

Die Figur 1 zeigt in rein schematischer, stark vereinfachter Darstellung ein Ausführungsbeispiel eines erfindungsgemäßen Systems S. Vorliegend handelt es sich bei diesem um ein Industrial-Edge-Gerät, welches einen Arbeitsknoten eines industriellen Clusters bildet. Der Cluster umfasst bevorzugt in an sich bekannter Weise eine Mehrzahl von Systemen 1 der in Figur 1 dargestellten Art, die beispielsweise an einem industriellen Netzwerk, etwa einer industriellen Automatisierungsanlage, teilnehmen. Das System 1 bzw. die Systeme 1 sind vorliegend jeweils durch einen Industrie-Computer gegeben, der eine Edge-Computing Funktion ausführt.

Dies ist nicht einschränkend zu verstehen. Ein erfindungsgemäßes System kann alternativ dazu beispielsweise auch durch eine virtuelle Maschine (VM) gegeben sein. Ein Cluster kann mehrere virtuelle Maschinen als Arbeitsknoten umfassen, die jeweils ein Ausführungsbeispiel eines erfindungsgemäßen Systems darstellen.

Das System S weist genau ein Betriebssystem OS auf, welches bei dem dargestellten Beispiel durch Linux gegeben ist.

Auf dem System S sind mehrere Software-Container, vorliegend Docker-Container C1-C7 vorhanden, die im Folgenden kurz als Container C bezeichnet werden. Die Container C1-C7 werden nicht von einer, sondern von mehreren Container-Engines CE1-CE4 verwaltet. Dabei ist jeder Container C1-C6 genau einer der Container-Engines CE1-CE4 zugeordnet und wird von dieser verwaltet. Bei dem gezeigten Beispiel gehören zu der Container-Engine CE1 die Container C1 und C2, zu der Container-Engine CE2 die Container C3 und C4, zu der Container-Engine CE3 die Container C5 und C6 und zu der Container-Engine CE4 der Container C7.

Es sein angemerkt, dass in den Figuren aus Gründen der Übersichtlichkeit Container-Engines CE1-CE4 mit gestrichelten und Container C1-C7 mit strichpunktierten Linien dargestellt sind.

Die Container-Engines CE1-CE4 sind vorliegend durch Docker-Engines gegeben. Die Docker-Engines CE1-CE4 umfassen vorliegend jeweils einen Docker Daemon, einen Container Daemon und runC.

Es gilt ferner, dass sich Container-Engines CE1-CE4 sowohl in Side-by-Side-Anordnung als auch in Container-in-Container-Anordnung befinden. Einerseits liegen die Container-Engines CE1 Und CE2 in einer Hierarchieebene nebeneinander, also "Side-by-Side". Andererseits liegt die Container-Engine CE3 in dem Container C4 der Container-Engine CE2 und die Container-Engine CE4 liegt in dem Container C6 der Container-Engine CE3. Die Container-Engines CE2, CE3 und CE4 sind somit in einer Matrjoschka-artigen "ineinander geschachtelte" Anordnung, liegen mit anderen Worten Container-in-Container.

Durch die erfindungsgemäße Vorgehensweise wird eine automatische Container-Discovery auch in dieser komplexen Systemkonfiguration mit mehreren Container-Engines CE1-CE4 in gemischten Anordnungen Seite-an-Seite und Container-in-Container möglich.

Hierfür weist das System S ein Discovery-Modul D auf. Es sei angemerkt, dass, auch wenn in der Figur 1 zwei Module D schematisch dargestellt sind, auf dem System S nur ein solches Modul D vorgesehen ist. Ein Discovery-Modul D kann beispielsweise ein "einfacher" Prozess sein, der in das System S integriert oder installiert ist. Ein Discovery-Modul D kann aber beispielsweise auch seinerseits als Container installiert und ausgeführt werden. Die Figur 1 zeigt beide dieser Möglichkeiten, indem das Modul D einmal in einem Container gezeigt ist, nämlich in dem Container C1, sowie einmal außerhalb der Container C1-C6 in Figur 1 ganz links.

Das Discovery-Modul D kann in beiden Varianten Software-implementiert sein, wobei dies nicht einschränkend zu verstehen ist.

Bevorzugt weist jedes einen Arbeitsknoten des Clusters darstellende System S ein eigenes Discovery-Modul D für die Container-Discovery auf.

Mit dem Discovery-Modul D werden die im Folgenden beschriebenen Schritte eines Ausführungsbeispiels des erfindungsgemäßen Verfahrens ausgeführt, wozu das Discovery-Modul D entsprechend ausgebildet und eingerichtet ist.

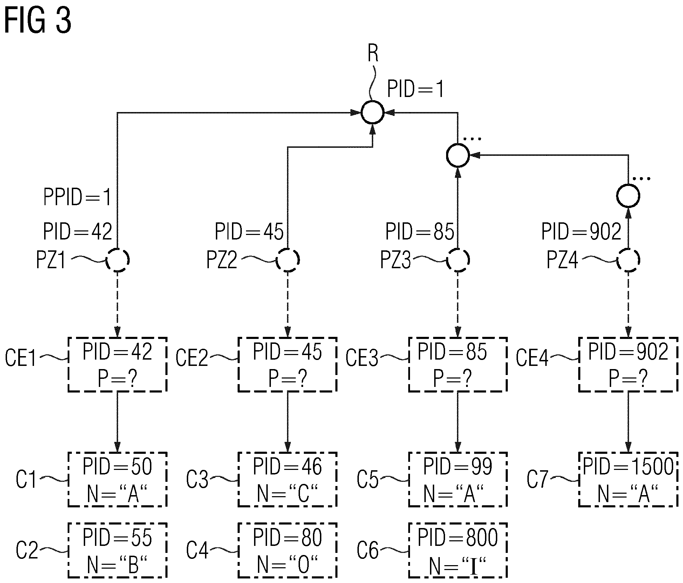

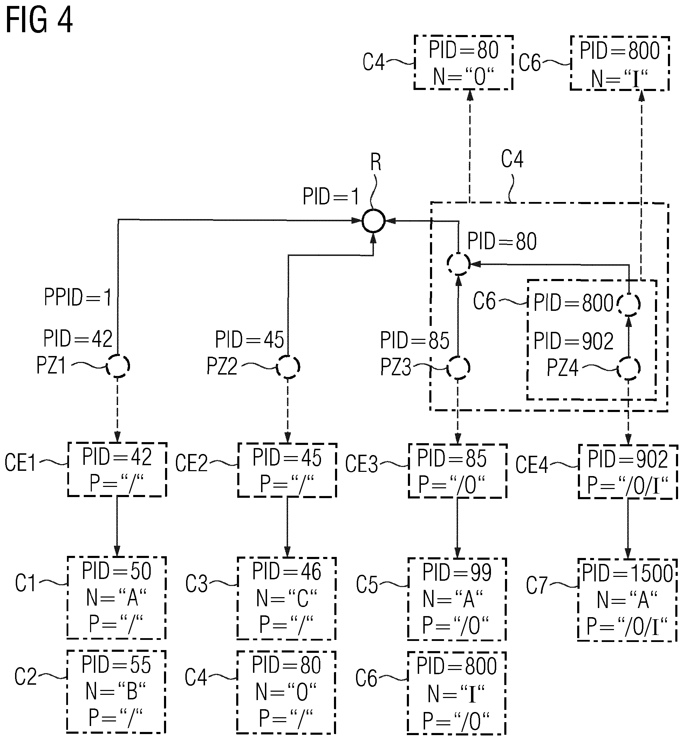

Das Discovery-Modul D überwacht das Betriebssystem OS und die Container-Engines CE1-CE4. Mit diesem werden die auf dem System S vorhandenen Container-Engines CE1-CE4 erfasst. Hierfür werden in dem Prozessbaum PT (siehe Figuren 3 und 4) des Betriebssystems OS des Systems S zu den Container-Engines CE1-CE4 gehörige Container-Engine-Prozesse PZ1-PZ4 und die zugehörigen Prozesskennungen PID ermittelt. In den Figuren 3 und 4 sind die PIDs in dem Prozessbau PT eingetragen, wobei diese Werte rein beispielhaft zu verstehen sind. In den Figuren 3 und 4 sind für die Container-Engines CE1-CE4 und die zugehörigen Container C1-C7 die PIDs und Pfade P bzw. Namen N in einem mit dem Bezugszeichen der jeweiligen Engine CE1-CE4 bzw. des jeweiligen Containers C1-C7 versehenen Blockelement dargestellt.

Container-Engines CE1-CE4 können beispielsweise anhand deren Namen (z.B. "dockerd") erkannt werden. Es ist auch möglich, dass das Discovery-Modul D eine Liste mit bekannten Namen von Container-Engine-Prozessen PZ1-PZ4 im Prozessbaum PT des Betriebssystems OS heranzieht. Container-Engines CE1-CE4 können alternativ oder zusätzlich auch über bekannte Prozesseigenschaften gefunden werden. Es kann auch bekannt sein, welche Größe diese aufweisen, bzw. in welchem Bereich deren Größe liegt. Dann kann eine Suche bzw. Identifikation über die Größe erfolgen. Das Discovery-Modul kann in Weiterbildung entsprechend ausgebildet und/oder eingerichtet sein.

Das Ergebnis der Suche bzw. der Container-Engine-Erfassung ist vorliegend eine Liste von Prozesskennungen PZ1-PZ4 aller aktuell auf dem System S laufender Container-Engines CE1-CE4.

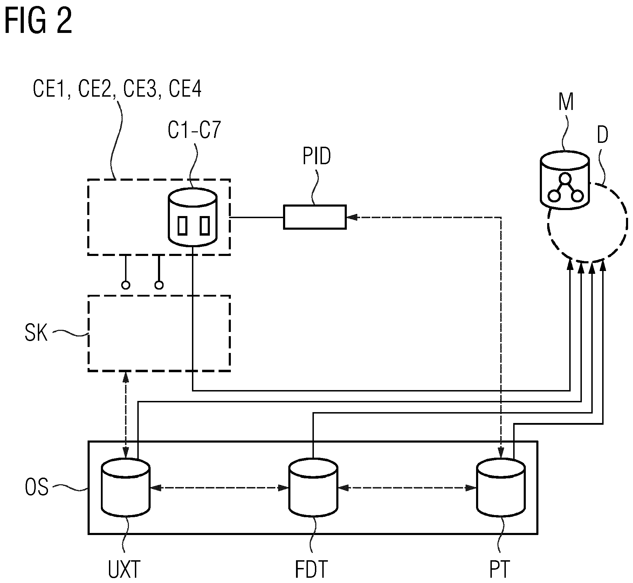

Für die erfassten Container-Engines CE1-C4 werden von dem Discovery-Modul in einem nächsten Schritt (Schritt b)) Steuerkanäle SK, vorliegend Control Unix Sockets (siehe Figur 2) ermittelt, über welche die Container-Engines CE1-CE4 angesprochen werden können. Diese Steuerkanäle SK werden vorliegend auch als mögliche Steuerkanäle erachtet und bezeichnet.

Das Ermitteln der möglichen Steuerkanäle SK in Schritt b) schließt vorliegend mit ein, dass in Mount-Namensräumen der Container-Engines CE1-CE4 jeweils diejenigen Steuerkanäle SK, konkret Control Unix Sockets, bevorzugt zusammen mit ihren inode-Nummern und ihren Pfaden im Dateisystem erfasst bzw. ermittelt werden, die sich im Zustand "listen" befinden. Dabei wird bevorzugt der Reihe nach vorübergehend in die Mount-Namensräume der Container-Engines CE1-CE4 gewechselt. Das Erfassen bzw. Ermitteln der Steuerkanäle SK kann anhand von Informationen aus /sys/net/unix UXT (siehe Figur 2) erfolgen. UXT steht dabei für Unix (domain) socket Table.

Anschließend werden der Reihe nach alle aktuell offenen Dateideskriptoren (englisch: file descriptors, abgekürzt fd) der Container-Engines CE1-CE4 anhand ihrer inode-Nummern dahingehend geprüft, ob sie auf einen der im vorherigen Schritt ermittelten Steuerkanäle SK im Zustand "listen" verweisen. Dateideskriptoren sind dabei sozusagen "Anfasser" für Datenkanäle zu Dateien, Geräten, Unix Sockets etc.

In diesem Zusammenhang sei rein beispielhaft folgendes ausgeführt. CE1 habe, wie vorliegend, die PID 42. CE1 möge aktuell die Dateideskriptoren (file descriptors) 0-18 geöffnet haben, d.h. /proc/42/fd/ enthält die Kindknoten "0" bis "19". Der Dateideskriptor "6" (/proc/42/fd/6) verweist auf den Unix socket mit der inode-Nummer 29368 (bspw. ermitteln via "readlink /proc/42/fd/6"), der Dateideskriptor "19" auf den Unix socket mit der inode-Nummer 228971.

Die Tabelle(n) der Unix sockets /proc/net/unix hat z.B. den folgenden Text-Aufbau:

| Num | RefCount | Protocol | Flags | Type | St | Inode Path |
|---|---|---|---|---|---|---|
| ffff95e3a8ed8400: | 00000002 | 00000000 | 00010000 | 0001 | 01 | 29368 |
| ... | | | | | | |
| /var/run/docker.sock | | | | | | |
| ... | | | | | | |

Hier findet sich nun der Unix socket mit der inode-NUmmer 29368. Er ist im Dateisystem als "/var/run/docker.sock" erreichbar. Der Status "01" weist ihn als "LISTENING" aus.

Der Unix socket mit der inode number 228971 verweist zwar auch auf "/var/run/docker.sock", ist aber im Zustand "03" "CONNECTED".

Das bedeutet, der Unix socket mit der inode-Nummer 29368 würde als möglicher Steuerkanal SK erachtet, derjenige mit der inode-Nummer 228971 hingegen nicht.

Das Ergebnis ist für jede einzelne Container-Engine CE1-CE4 bzw. jedes einzelne Container-Engine-Exemplar CE1-CE4 zunächst eine eigene (geordnete) Liste von potenziellen, also möglichen Steuerkanälen, über die die jeweilige Container-Engine CE1-CE4 angesprochen werden könnte. Je nach Art einer Container-Engine CE1-CE4 existieren möglicherweise mehrere Steuerkanäle SK für diese, wobei jeder Steuerkanal SK möglicherweise andere Funktionen bereitstellt. Es kann sein, dass nicht jeder Steuerkanal SK die Funktionalität bereitstellt, um auf die Liste der Container C1-C7 einer Container-Engine CE1-CE4 zuzugreifen.

Im nächsten Schritt (Schritt c)) werden von dem Discovery-Modul D unter Nutzung zumindest einiger der Steuerkanäle SK zu den von diesem erfassten Container-Engines CE1-CE4 gehörige Container C1-C7 sowie deren Prozesskennungen PIDs und Namen N ermittelt. Nach Möglichkeit werden alle Container C1-C7 von allen Container-Engines Ce1-CE4 nebst zugehöriger PIDs und Namen ermittelt.

Dabei wird für die jeweilige Container-Engine CE1-CE4 in dem Mount-Namensraum dieser versucht, über den oder die möglichen Steuerkanäle SK die Container-Engine CE1-CE4 zu kontaktieren und den oder die dieser zugeordneten Container C1-C7, deren PIDs und Namen N abzufragen. Diejenigen Steuerkanäle SK, über welche dies gelingt, können als geeignete Steuerkanäle SK erachtet und bezeichnet werden.

Dabei wird der Reihe nach in die Mount-Namensräume von allen Container-Engines CE1-CE4 gewechselt. Für den Fall, dass die einer Container-Engine CE1-CE4 zugeordneten Container C1-C7 ausgelesen werden konnten oder aber über keinen der möglichen Steuerkanäle SK einer Container-Engine CE1-CE4 deren Container C1-C7 ausgelesen werden können bzw. konnten, wird jeweils in den Mount-Namensraum der nächsten Container-Engine CE1-CE4 gewechselt und versucht, die zugeordneten Container C1-C7 dieser zu ermitteln. So kann der Reihe nach von Mount-Namensraum zu Mount-Namensraum der laufenden Container-Engines CE1-CE4 gewechselt werden, bis alle vorhandenen Engines CE1-CE4 durch sind. Nach der letzten Container-Engine CE1-CE4 findet zweckmäßiger Weise kein weiterer Wechsel mehr statt.

In der Figur 3 ist unterhalb der Container-Engines CE1-CE4 rein schematisch von der jeweiligen Engine CE1-CE4 verwalteter Content dargestellt, konkret sind hier nochmals die Container C1-C7 der Engines CE1-CE4 mit deren PIDs und Namen N gezeigt.

In Schritt d) wird von dem Discovery-Modul D (nach Möglichkeit) für alle Container-Engines CE1-CE4 ein Pfad P (siehe Figur 3) erstellt. Es sei angemerkt, dass es passieren kann, dass dies für wenigstens eine der erfassten Engines CE1-CE4 nicht möglich ist, beispielsweise, weil es bereits nicht möglich war, geeignete Steuerkanäle SK für diese zu finden bzw. deren Container zu erfassen.

Unter einem Pfad P ist insbesondere eine hierarchische Kennung bzw. eine Kennung zu verstehen, aus der eine Hierarchie bzw. Hierarchie-Informationen abzuleiten ist bzw. sind, insbesondere aufgrund der Reihenfolge von in dem Pfad P bzw. der Kennung enthaltenen Bestandteilen.

Dabei wird in dem Prozessbaum PT ausgehend von der Prozesskennung PID der jeweils betrachteten Container-Engine CE1-CE4 in Richtung der Wurzel R des Prozessbaums PT gesucht, und für jede zu einem der in Schritt c) ermittelten Container C1-C7 gehörende Prozesskennung PID (Container-Prozesskennung) wird ein bzw. der Name desjenigen Containers C1-C7, dessen Container-Prozesskennung PID (jeweils) gefunden wurde, dem bisherigen, zu Beginn der Suche insbesondere leeren Pfad hinzugefügt, bevorzugt vorangestellt.

Der Name eines Containers C1-C7 wird bevorzugt von der jeweiligen Container-Engine CE1-CE4 verwaltet, zu welcher der Container C1-C7 gehört, und kann beispielsweise automatisch generiert oder auch durch ein Container-Orchestrierungs-System vorgegeben werden bzw. sein.

Vorliegend wird für die jeweilige Container-Engine CE1-CE4 zunächst ein leerer Pfad bzw. Ursprungspfad, beispielsweise "" oder "/", angenommen und insbesondere initialisiert. Für den Fall, dass für eine Container-Engine CE1-CE4 eine oder mehrere Container-Prozesskennungen PID gefunden werden, kann dann beispielsweise der Name bzw. können dann beispielsweise die Namen der zugehörigen Container C1-C7 dem (jeweiligen) leeren Pfad hinzugefügt werden. Für den Fall, dass für eine Container-Engine CE1-CE4 hingegen keine Container-Prozesskennungen PID gefunden wird, wird dieser Engine CE1-CE4 zweckmäßiger Weise der leere Pfad zugeordnet.

Wenn dabei für eine Container-Engine CE1-CE4 in dem Prozessbaum PT in Richtung der Wurzel R mehr als eine Container-Prozesskennung PID gefunden wird, werden die zugehörigen Namen besonders bevorzugt in umgekehrter Reihenfolge in den Pfad P aufgenommen als die Container-Prozesskennungen PID ausgehend von der betrachteten Prozesskennung PID der Container-Engine CE1-CE4 in Richtung der Prozessbaumwurzel R in dem Prozessbaum PT vorhanden sind. Dies entspricht insbesondere der zu Auffinden der Container-Prozesskennungen PID umgekehrten Reihenfolge.

Dies ist vorliegend für die Container-Engine CE4 der Fall. Diese hat bei dem dargestellten Beispiel die PID 902 (siehe Figuren 3 und 4). Ausgehend von dieser und in Richtung der Wurzel R befinden sich im Prozessbaum PT noch die Container-Prozesskennungen 800, also die PID des Containers C6 und die Container-Prozesskennung 80, also die PID des Containers C4 (vgl. insbesondere Figur 4 oben, in der die Container C4 und C6 über dem Prozessbaum PT dargestellt sind und rechts davon nochmals die zugehörigen PIDs und Namen N). Der Container C6 hat den Namen "I" (inner) und der Container C4 den Namen "O" (outer). Damit ergibt sich für die Engine CE4 mit der PID 902 der Pfad P = "/O/I". Der Pfad der Container-Engine CE4 ist mit anderen Worten die Aneinanderreihung der Namen der bei dem "Klettern" entlang des Prozessbaums PT bzw. Prozessbaum-Astes gefundenen Container C1-C7 bevorzugt in umgekehrter Reihenfolge.

Die Suche in dem Prozessbaum PT für die jeweilige Engine CE1-CE4 erfolgt zweckmäßiger Weise so lange, bis die oberste Prozesskennung PID des Prozessbaums PT bzw. die Wurzel R (vorliegend PID=1, siehe Figuren 3 und 4) erreicht ist. Damit ist die Suche für die jeweils betrachtete Container-Engine CE1-CE4 beendet und deren Pfad P fertig. Es sei angemerkt, dass in den Figuren 3-5 links der Prozesskennungen PID der Container-Engines CE1-CE4 mit PPID=1 nochmals dargestellt ist, dass die Prozesskennung des zugehörigen Elternprozesses 1 lautet, es sich also um die oberste Prozesskennung PID handelt.

Bei dem gezeigten Beispiel gibt es sozusagen zwei Verschachtelungs-Ebenen, da die Engine CE3 in einem Container C4 der Engine CE2 liegt und die Engine CE4 wiederum in einem Container C6 der Engine CE3. Es existieren somit drei Hierarchie-Ebenen, die der Engines CE1 und CE2, die der Engine CE3 und die der Engine CE4. Bei dem Beispiel hat der Container C4 den Namen "O", da er in diesem Szenario der äußere ("Outer") Container mit Engine CE3 ist und der Container C6 den Namen "I", weil er der innere ("Inner") Container mit Engine CE4 ist.

Für die Engine CE3 mit der PID 85, welche nur in den Container CE4 "geschachtelt" ist, ergibt sich dabei der Pfad P ="/O", da vor dieser im Prozessbaum in Richtung der Wurzel R nur die Container-PID 80 des Containers C4 mit dem Namen "O" liegt.

In den Figuren sind auch die weiteren Containernamen neben "O" und "I" eingetragen, die hier "A", "B" und "C" lauten. Es sein betont, dass diese - genau wie die Namen "O" und "I" rein beispielhaft zu verstehen sind.

Es ist prinzipiell möglich, dass der Pfad P auch noch den bzw. einen "Namen" der Container-Engine erhält, der zum Beispiel "dockerd" lauten kann. Dann würde man z.B. "/dockerd" anstatt "" bzw. "/dockerd/O" anstatt "/O" erhalten.

Wird auf dem Weg von der Prozesskennung PID der betrachteten Container-Engine CE1-CE4 bis zur Wurzel R keine Prozesskennung PID eines Containers C1-C7 gefunden, bedeutet dies, dass die Container-Engine CE1-CE4 nicht ihrerseits in einem Container C1-C7 liegt, sozusagen nicht in einen (oder auch mehrere) Container C1-C7 verschachtelt ist. Dies ist bei dem dargestellten Beispiel für die Container-Engines CE1 und CE2 der Fall. Für diese mit den PIDs 42 bzw. 45 ergibt sich ein leerer Pfad bzw. Ursprungspfad P, vorliegend P = "/".

Es kann vorteilhaft sein zu vermeiden, dass zwei oder mehr der Container-Engines CE1-CE4 der gleiche Pfad zugeordnet wird. Entsprechend kann vorgesehen sein, dass für den Fall, dass für die Container-Engines CE1-CE4 erstellten Pfade P zwei oder mehr identische Pfade P umfassen, eine Vereinzelung der Pfade P durchgeführt wird. Bei dem beschriebenen Beispiel ist für die Container-Engines CE1 und CE2 der gleiche Pfad P erstellt worden, nämlich für beide der "leere" bzw. "Ursprungspfad" "/", da diese beiden Engines nebeneinander in der obersten Hierarchie-Ebene liegen.

Das Discovery-Modul D prüft bevorzugt im Anschluss an die Erstellung aller Pfade P in Schritt d), ob Pfade P mehrfach vorhanden sind. Ergibt die Prüfung, dass dem so ist, kann das Discovery-Modul D identische Pfade P vereinzeln.

Die Vereinzelung der Pfade P kann beispielsweise erfolgen, indem (jeweils) identischen Pfaden P unterschiedliche zusätzliche Pfadbestandteile hinzugefügt werden. Als zusätzliche Pfadbestandteile zum Erhalt einer Vereinzelung kommen beispielsweise die Prozesskennung PID und/oder der Name der Container-Engine CE1-CE4, für welche der jeweilige Pfad P erstellt wurde, in Frage. Dies ist rein beispielhaft zu verstehen und es können selbstverständlich auch andere Bestandteile in identische Pfade P eingefügt werden, um diese zu vereinzeln. Die einzige Anforderung ist, dass durch die Vereinzelungs-Maßnahme aus zwei oder mehr identischen Pfaden P zwei oder mehr verschiedene Pfade erhalten werden.

Vorliegend werden den beiden identischen Pfaden P von CE1 und CE2 zur Vereinzelung die PIDs der Engines CE1 und CE2 hinzugefügt. Hierdurch ergibt sich für die Container-Engine CE1 als Pfad P "/42" und für die Engine CE2 als Pfad P "/45", man erhält also voneinander verschiedene, vereinzelte Pfade P.

Zweckmäßiger Weise werden für die Vereinzelung in kürzeren Pfaden P durchgeführte Anpassungen in gegebenenfalls vorhandene, von den kürzeren Pfaden P abhängige länger Pfade P übernommen. Bei dem dargestellten Ausführungsbeispiel kann bevorzugt die für die Engine CE2 für die Vereinzelung durchgeführte Anpassung in die Pfade der Engines CE3 und CE4 übernommen werden, die beide in Containern C4, C6 liegen, die der Engine CE2 - in einfacher oder zweifacher "Verschachtelung" unterlagert sind (vgl. insbesondere Figur 1). Durch die Übernahme der Vereinzelungs-Maßnahme auch in diese abhängigen Pfade P, würde sich dann für die Engine CE3 der Pfad "/45/O" und für die Engine CE4 der Pfad "/45/O/I" ergeben.

Es sei angemerkt, dass für den Fall, dass alternativ zu dem dargestellten Beispiel mehre identische Pfade P auch unterschiedlicher Länge erstellt werden, z.B. zwei Pfade "/" und zwei Pfade "/O", die Pfad-Vereinzelung besonders bevorzugt derart erfolgt, dass mit den kürzesten identischen Pfaden P begonnen wird.

Weiterhin sei angemerkt, dass zum Erhalt der Pfadvereinzelung zusätzliche Bestandteile bevorzugt am hinteren, rechten Ende des jeweiligen Pfades P hinzugefügt werden, wie vorstehend am Beispiel des leeren bzw. Ursprungspfads "/", dem rechts die PID 42 bzw. 45 angehängt wurde, dargestellt.

In vorteilhafter Ausgestaltung überprüft das Discovery-Modul D, nachdem es ein erstes Mal zwei oder auch mehr insbesondere kürzeste identische Pfade P gefunden und vereinzelt und gegebenenfalls davon abhängige Pfade P entsprechend angepasst hat, wenigstens ein weiteres Mal, ob noch identische Pfade P vorhanden sind und vereinzelt ggf. auch diese. Dies kann so oft wiederholt werden, bis keine identischen Pfade P mehr von dem Discovery-Modul D gefunden werden.

Um ein mögliches Beispiel zu nennen, sei angenommen, in dem Container C6 würde sich neben der Container-Engine CE4 noch eine weitere Engine (Side-by-Side) befinden. Diese hätte dann ebenfalls den Pfad "/45/O/I", was das Discovery-Modul D erkennen würde und es wäre eine weitere Vereinzelungsmaßnahme erforderlich. Das Discovery-Modul D könnte dann beispielsweise erneut die PID der betreffenden Container-Engines in die Pfade P hinzufügen, bevorzugt an deren rechtem Ende. Davon ausgehend, dass die weitere, ebenfalls in dem Container C6 liegende Engine die PID 905 hat, was beispielhaft zu verstehen ist, würden sich die vereinzelten Pfade "/45/O/I/902" für die Engine CE4 und "/45/O/I/905" für die weitere Engine im gleichen Container C6 ergeben.

Das Discovery-Modul D erstellt ein Datenmodell M (siehe Figuren 1 und 2), das alle ermittelten Container C1-C7 aufführt. In vorteilhafter Ausgestaltung werden von dem Discovery-Modul D die für die Container-Engines CE1-CE4 ermittelten - und ggf. vereinzelten - Pfade P in den Daten des oder der zugehörigen Container C1-C7 gespeichert. Dabei wird in den Daten jedes Containers C1-C7 der Pfad P der jeweiligen Engine CE1-CE4 abgelegt. Diese Datensätze enthalten die Informationen pro Container C1-C7, die von den Container-Engines CE1-Ce4 zuvor abgefragt wurden. Die Pfade P sind in der Figur 4 in der jeweiligen Container-Engine CE1-CE4 und den zu dieser zugehörigen Containern C1-C7 eingetragen. So wird es möglich, dass insbesondere auch später noch eine einfache und eindeutige Zuordnung (jeweils) zwischen einem einzelnen Container C1-C7 und seiner Container-Engine CE1-CE4 zur Verfügung steht.

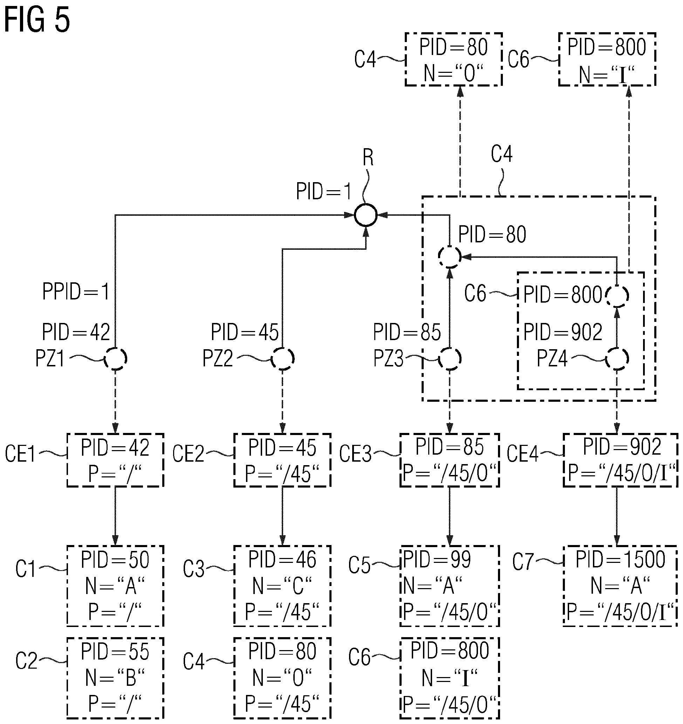

Werden Pfade P vereinzelt, werden zweckmäßiger Weise die vereinzelten Pfade P in dem Datenmodell M des Discovery-Moduls D und/oder in den Daten der betreffenden Container C1-C7 gespeichert. Für das vorstehend beschriebene Beispiel würde- in dem Falle, dass die vorstehend beispielhaft beschriebene Vereinzelung erfolgt - für die gespeicherten Daten das gelten, was in Figur 5 gezeigt ist.

Auf die bereitgestellten Daten M kann dann beispielsweise von einem externen Plugin für das Aufzeichnen von Netzwerkverkehr (sog. Extcaps) zugegriffen werden. Ein solches, beispielsweise ein Wireshark-Plugin, kann das Datenmodell M des Discovery-Moduls D z.B. verwenden, um einem Anwender eine Liste verfügbarer Container C1-C7 (insbesondere einschließlich deren Namen N und Pfaden P) zu präsentieren.

Der Zugriff kann beispielsweise über ein REST API erfolgen. REST steht dabei für Representational State Transfer und API für Application Programming Interface. In der Figur 1 ist dieser Zugriff durch mit API versehene Pfeile schematisch angedeutet.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Bestimmung einer Container-Konfiguration eines Systems (S), wobei das System (S) ein Betriebssystem (OS) aufweist und auf dem System (S) mehrere Software-Container (C1-C7) vorhanden sind, die von mehreren Container-Engines (CE1-CE4) verwaltet werden, bei dem mittels eines Discovery-Moduls (D)
a) die Container-Engines (CE1-CE4) erfasst werden, wobei in einem Prozessbaum (PT) des Betriebssystems (OS) des Systems (S)zu den Container-Engines (CE1-CE4) gehörige Container-Engine-Prozesse (PZ1-PZ4) ermittelt werden,
b) für die erfassten Container-Engines (CE1-CE4) Steuerkanäle (SK) ermittelt werden, über welche die Container-Engines (CE1-CE4) angesprochen werden können,
c) unter Nutzung zumindest einiger der Steuerkanäle (SK) ermittelt wird, welche Container (C1-C7) zu welchen Container-Engines (CE1-CE4) gehören und welche Prozesskennungen (PID) (N) die Container (C1-C7) jeweils aufweisen, und
d) für eine oder mehrere der Container-Engines (CE1-CE4) ein Pfad (P) erstellt wird, wobei ermittelt wird, ob in dem Prozessbaum (PT) ausgehend von der Prozesskennung (PID) der oder der jeweiligen Container-Engine (CE1-CE4) in Richtung der Prozessbaumwurzel (R) eine oder mehrere Prozesskennungen (PID) vorhanden sind, welche jeweils zu einem der in Schritt c) ermittelten Container (C1-C7) gehören, Container-Prozesskennungen, und für den Fall, dass eine oder mehrere Container-Prozesskennungen (PID) vorhanden sind, eine Kennung (N) des zugehörigen Containers (C1-C7) bzw. Kennungen (N) der zugehörigen Container (C1-C7) in den Pfad (P) der oder der jeweiligen Container-Engine (CE1-CE4) aufgenommen wird bzw. werden.

2. Verfahren nach Anspruch 1,
**dadurch gekennzeichnet, dass**
in Schritt a) Prozesskennungen (PID) der Container-Engine-Prozesse (PIZ1-Piz4) der Container-Engines (CE1-CE4) ermittelt werden.

3. Verfahren nach Anspruch 1 oder 2,
**dadurch gekennzeichnet, dass**
in Schritt d) für die oder die jeweilige Container-Engine (CE1-CE4) zunächst ein leerer Pfad (P) oder Ursprungspfad (P) angenommen wird, und für den Fall, dass für eine Container-Engine (CE1-CE4) eine oder mehrere Container-Prozesskennungen (PID) gefunden werden, die Kennung bzw. die Kennungen (N) der zugehörigen Container (C1-C7) dem leeren Pfad (P) hinzugefügt wird bzw. werden, und für den Fall, dass für eine Container-Engine (CE1-CE4) keine Container-Prozesskennungen (PID) gefunden werden, dieser der leere Pfad (P) zugeordnet wird.

4. Verfahren nach einem der vorhergehenden Ansprüche,
**dadurch gekennzeichnet, dass**,
wenn in Schritt d) für eine Container-Engine (CE1-CE4) mehr als eine Container-Prozesskennung (PID) gefunden wird, die zugehörigen Kennungen (N) in umgekehrter Reihenfolge in den Pfad (P) aufgenommen werden als die Container-Prozesskennungen (PID) ausgehend von der Prozesskennung (PID) der Container-Engine (CE1-CE4) in Richtung der Prozessbaumwurzel (R) in dem Prozessbaum (PT) vorhanden sind.

5. Verfahren nach einem der vorhergehenden Ansprüche,
**dadurch gekennzeichnet, dass**
wenigstens zwei der Container-Engines (CE1-CE4) in einer Side-by-Side-Anordnung und/oder wenigstens zwei der Container-Engines (CE1-CE4) in einer Container-in-Container-Anordnung vorgesehen sind.

6. Verfahren nach einem der vorhergehenden Ansprüche,
**dadurch gekennzeichnet, dass**
in Schritt b) das Ermitteln der Steuerkanäle (SK) einschließt, dass in Mount-Namensräumen der Container-Engines (CE1-CE4) jeweils diejenigen Steuerkanäle (SK), insbesondere Unix Sockets, bevorzugt zusammen mit ihren inode-Nummern und ihren Pfaden im Dateisystem ermittelt werden, die sich im Zustand "listen" befinden.

7. Verfahren nach Anspruch 6,
**dadurch gekennzeichnet, dass**
in Schritt b) das Ermitteln der Steuerkanäle (SK) einschließt, dass Handle, insbesondere Dateideskriptoren der Container-Engines anhand ihrer inode-Nummern darauf geprüft werden, ob sie auf einen der ermittelten, sich im Zustand "listen" befindlichen Steuerkanäle (SK) verweisen.

8. Verfahren nach einem der vorhergehenden Ansprüche,
**dadurch gekennzeichnet, dass**
in Schritt c) für die oder die jeweilige Container-Engine (CE1-CE4) in dem Mount-Namensraum dieser versucht wird, über den oder die Steuerkanäle (SK) die Container-Engine (CE1-CE4) zu kontaktieren und den oder die dieser zugeordneten Container (C1-C7) abzufragen.

9. Verfahren nach Anspruch 8,
**dadurch gekennzeichnet, dass**
der Reihe nach in die Mount-Namensräume von zwei oder mehr Container-Engines (CE1-CE4) gewechselt wird, wobei jeweils für den Fall, dass die einer Container-Engine (CE1-CE4) zugeordneten Container (C1-C7) ausgelesen werden konnten oder über keinen der Steuerkanäle (SK) der Container-Engine (CE1-CE4) deren Container (C1-C7) ausgelesen werden konnten, in den Mount-Namensraum der nächsten Container-Engine (CE1-CE4) gewechselt und versucht wird, die zugeordneten Container (C1-C7) dieser zu ermitteln.

10. Verfahren nach einem der vorhergehenden Ansprüche,
**dadurch gekennzeichnet, dass**
für den Fall, dass die in Schritt d) für die Container-Engines erstellten Pfade zwei oder mehr identische Pfade umfassen, eine Vereinzelung der Pfade durchgeführt wird.

11. Verfahren nach Anspruch 10,
**dadurch gekennzeichnet, dass**
die Vereinzelung erfolgt, indem identischen Pfaden unterschiedliche zusätzliche Pfadbestandteile hinzugefügt werden.

12. Verfahren nach einem der vorhergehenden Ansprüche, **dadurch gekennzeichnet, dass**
der oder die in Schritt d) für die oder die jeweilige Container-Engine (CE1-CE4) ermittelten Pfade und gegebenenfalls vereinzelten (P) gespeichert werden, insbesondere in dem Discovery-Modul (D) und/oder in den Daten des oder der zu der jeweiligen Container-Engine (CE1-CE4) gehörigen Container (C1-C7).

13. Verfahren nach einem der vorhergehenden Ansprüche,
**dadurch gekennzeichnet, dass**
das Discovery-Modul (D) ein Datenmodell (M) erstellt, das alle in Schritt c) ermittelten Container (C1-C7) aufführt.

14. System (S), auf dem mehrere Software-Container (C1-C7) vorhanden sind, die von mehreren Container-Engines (CE1-CE4) verwaltet werden, wobei das System (S) ein Betriebssystem (OS) umfasst und ein Discovery-Modul (D), das dazu ausgebildet und/oder eingerichtet ist,
a) die Container-Engines (CE1-CE4) zu erfassen, wobei in einem Prozessbaum (PT) des Betriebssystems (OS) des Systems (S) zu den Container-Engines (CE1-CE4) gehörige Container-Engine-Prozesse (PZ1-PZ4) ermittelt werden,
b) für die erfassten Container-Engines (CE1-CE4) Steuerkanäle (SK) zu ermitteln, über welche die Container-Engines (CE1-CE4) angesprochen werden können,
c) unter Nutzung zumindest einiger der Steuerkanäle (SK) zu ermitteln, welche Container (C1-C7) zu welchen Container-Engines (CE1-CE4) gehören und welche Prozesskennungen (PID) die Container (C1-C7) jeweils aufweisen, und
d) für eine oder mehrere der Container-Engines (CE1-CE4) einen Pfad (P) zu erstellen, wobei ermittelt wird, ob in dem Prozessbaum (PT) ausgehend von der Prozesskennung (PID) der oder der jeweiligen Container-Engine (CE1-CE4) in Richtung der Prozessbaumwurzel (R) eine oder mehrere Prozesskennungen (PID) vorhanden sind, welche jeweils zu einem der in Schritt c) ermittelten Container (C1-C7) gehören, Container-Prozesskennungen, und für den Fall, dass eine oder mehrere Container-Prozesskennungen (PID) vorhanden sind, eine Kennung (N) des zugehörigen Containers (C1-C7) bzw. Kennungen (N) der zugehörigen Container (C1-C7) in den Pfad (P) der oder der jeweiligen Container-Engine (CE1-CE4) aufgenommen wird bzw. werden.

15. Computerprogramm umfassend Programmcode-Mittel, die bei der Ausführung des Programms auf wenigstens einem Computer den wenigstens einen Computer veranlassen, die Schritte des Verfahrens nach einem der Ansprüche 1 bis 13 durchzuführen.

16. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 13 durchzuführen.
